# EUROPEAN PATENT SPECIFICATION

(11) **EP 4 587 272 B1**
(45) Date of publication and mention of the grant of the patent: **17.06.2026**
(21) Application number: 23776270.3
(22) Date of filing: 13.09.2023
(51) Int. Cl.: B60C 25/02

(54) **HANDTOOL FOR CHANGING BICYCLE TYRES**
HANDWERKZEUG ZUM WECHSELN VON FAHRRADREIFEN
OUTIL A MAIN POUR CHANGER DES PNEU DE BICYCLETTES

(30) Priority: 13.09.2022 GB 202213396
(43) Date of publication of application: 23.07.2025
(73) Proprietor: Tru Tension Ltd, Backwell, Bristol BS48 4AE (GB)
(72) Inventor: FRAPPELL, Chris, Bristol BS48 4RG (GB)
(74) Representative: Bryers Intellectual Property Ltd
(86) International application number: PCT/EP2023/075106
(87) International publication number: WO 2024/056710

(56) References cited:
- EP-A1- 3 862 198
- WO-A1-87/05566
- JP-U- S5 041 206
- US-A1- 2010 051 204
- US-A1- 2013 192 767

## Description

The present invention relates to tools for fitting bicycle tyres on bicycle wheel rims and/or removing bicycle tyres from bicycle wheel rims.

### Background

As part of bicycle maintenance and repair, fitting bicycle tyres on and removing bicycle tyres from wheel rims may be performed. Depending on the type of tyre and the wheel rim on which the tyre is installed on or is to be removed from, the ease of fitting/removal from the wheel rim can vary greatly depending on the type of tyre used and how tightly the tyre sits on the wheel rim. Often, a tool such as a tyre lever may be used to aid a user in lifting the tyre bead and the corresponding section of the tyre side wall over the wheel rim during fitting or removal of the tyre.

For example, when fitting the tyre onto the wheel rim, a tyre lever may be used to ease the tyre over the side wall of the rim, as well as to ensure the correct positioning of the tyre being fitted. During removal of the tyre from the wheel rim, the lever may be placed between the wheel rim and the tyre bead to separate the tyre wall from the wheel rim and lift a section of the tyre bead over the side wall of the rim.

Existing solutions are associated with several disadvantages, ranging from complexity of the tool and therefore its ease of use, high cost, and/or difficulty during installation/removal of the tyre. It is therefore an object of the present invention to provide the user with a simple, robust tool to facilitate the fitting and removal of the tyre without damaging it in the process.

US 2013/192767 A1 (Crank Brothers) describes a tool having an elongate body with a tyre lever at one end of the body to aid in removal of a cycle tyre from cycle wheel and a hook at the other end of the body to aid in mounting a tyre to the wheel. EP 3 862 198 A1 describes a similar tool. WO 87/05566 A1 describes a tool having a combined hook and lever for use in removing and mounting a cycle tyre from a cycle wheel. JP S50 41206 A1 describes a tool having a lever for use in removing a cycle tyre from a cycle wheel and a movable wire bar to bear against a rim of the wheel to assist in mounting a tyre to the wheel. These tools all require the user to place their hand very close to the wheel whilst mounting a tyre to the wheel. US 2010/051204 A1 describes a tool for use in demounting tyres, particularly truck tyres, from truck wheels.

### Summary of invention

An objective of the present invention is to provide a tool for fitting and removing a tyre on a wheel rim.

The foregoing and other objectives are achieved by the features of the independent claims.

Further implementation forms are apparent from the dependent claims, the description and the Figures.

In a first aspect, the present invention provides a tool as defined in claim 1.

Accordingly, a simple, inexpensive tool for fitting and removing a tyre on a wheel rim can be provided. Due to the orthogonal arrangement of the hook portion with respect to the elongate body serving as a handle, the problem of the user hitting their hands on the wheel spokes during maintenance of a bike or a similar vehicle can averted.

As the hook portion comprises a protrusion located at a rear portion of the hook portion, the protrusion, in use, engages with a side wall of the wheel rim to keep the tool in place during removal of the tyre. Thus, the tool can stay in place during removal of the tyre, as the user applies pressure.

The channel and lip arranged to engage with an inner portion of the side wall of the wheel rim allows the tool can be kept in place during installation of the tyre.

The tyre-engagement portion may comprise a substantially flat surface.

The elongate body may comprise an aperture. Thus, the tool can be stored easily, for example on a hook.

The elongate body may comprise a plurality of structural support elements. Thus, the user can apply pressure safely, with the risk of the tool breaking being minimised. The elongate body may be generally planar in form.

In some embodiments, the tool may be cast of metal or moulded from a resilient polymeric material. In other embodiments, the elongate body may be an elongate metal body and may include a polymeric material overmoulded to the metal body.

In a second aspect, the present invention provides a method as defined in claim 6 for removing a tyre from a wheel rim using the tool.

Accordingly, due to the orthogonal arrangement of the hook portion with respect to the elongate body serving as a handle, the problem of the user hitting their hands on the wheel spokes during maintenance of a bike or a similar vehicle can averted.

In a third aspect, the present invention provides a method as defined in claim 7 for fitting a tyre on a wheel rim using the tool.

Accordingly, due to the orthogonal arrangement of the hook portion with respect to the elongate body serving as a handle, the problem of the user hitting their hands on the wheel spokes during maintenance of a bike or a similar vehicle can averted.

These and other aspects of the invention will be apparent from the embodiment(s) described below.

### Brief description of the drawings

In order that the present invention may be more readily understood, embodiments of the invention will now be described, by way of example, with reference to the accompanying drawings, in which:
Figure 1 is a view of a side of the tool according to an embodiment of the present invention;
Figure 2 is a perspective view of the tool of Figure 1;
Figure 3 is the tool of Figure 1 as viewed from above;
Figure 4 is the tool of Figure 1 as viewed from below;
Figure 5 depicts the tool of Figure 1 in use during fitting of a tyre on a wheel rim;
Figure 6 depicts the tool of Figure 1 in use during removal of a tyre from a wheel rim;
Figure 7 is a view of a side of the tool according to another embodiment of the present invention;
Figure 8 is a perspective view of the tool of Figure 7;
Figure 9 is the tool of Figure 7 as viewed from above.

### Detailed description

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

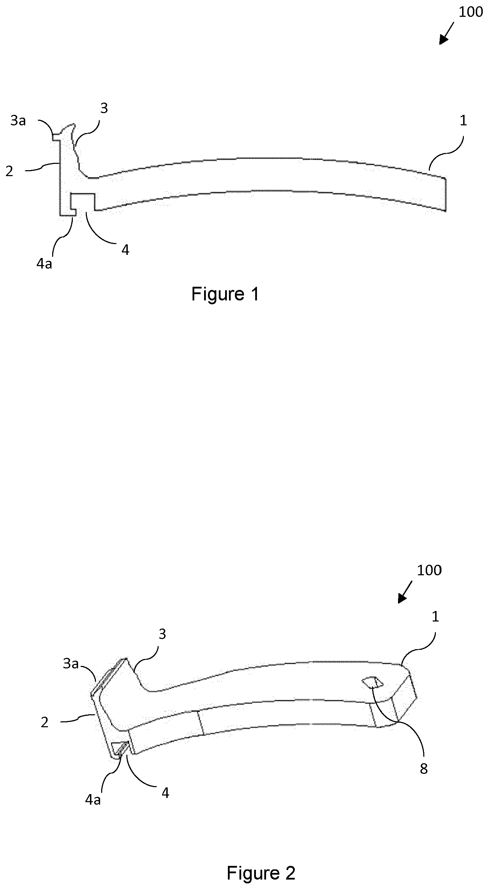

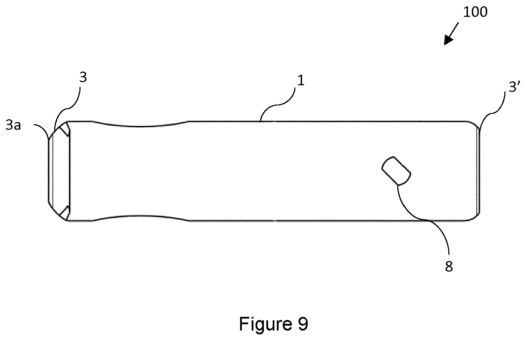

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein. Referring to Figures 1-9, there is shown a tool according to an embodiment of the present invention.

The tool 100 comprises an elongate body 1, forming a handle for the tool 100. The elongate body 1 has a plane and a longitudinal axis. The elongate body 1 may be generally planar in form. In some embodiments, a cross-section of the elongate body 1 may be substantially circular.

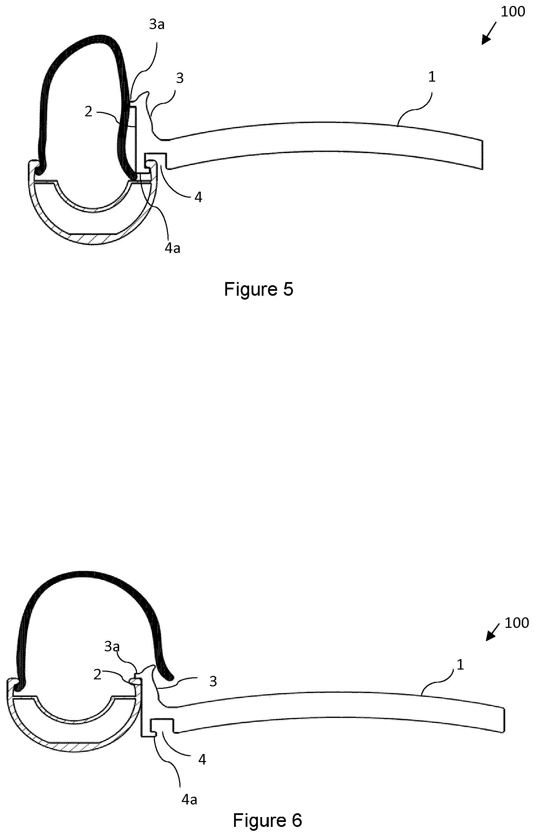

The tool 100 comprises a tyre-engagement portion 2 having a first side arranged to, in use, engage with an outer side wall of the tyre to thereby facilitate fitting of the tyre, as shown in Figure 5. The plane of the tyre-engagement portion 2 is substantially perpendicular to the longitudinal axis of the elongate body 1.

The tool 100 may be made from any material of suitable strength, for example plastics material or metal. The tool 100 may be formed as a unitary component. The tool 100 may also be manufactured in separate units/modules attachable to the body.

The tool 100 comprises a hook portion 3, orthogonal to the longitudinal axis of the elongate body 1. The hook portion 3 is arranged to, in use, engage with an inner side wall of the tyre to thereby facilitate removal of the tyre, as shown in Figure 6. Advantageously, this allows the tool 100 to, in use, facilitate removal (or, indeed, installation/replacement) of the tyre while being arranged at 90 degrees to the wheel. This minimises the risk of a user hitting their hands on the spokes during removal. This is in contrast to the solutions currently available on the market, which are used at 180 degrees to the wheel.

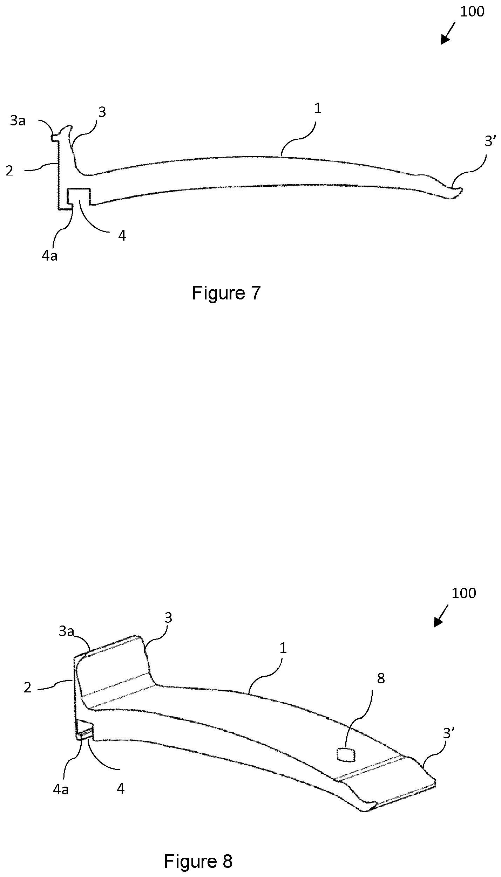

As depicted in Figures 7-9, the tool 100 may comprise a second hook portion 3', in addition to the hook portion 3. The second hook portion 3' may be identical in purpose to the hook portion 3. That is, the second hook portion 3' may also be arranged to, in use, engage with the inner side wall of the tyre to thereby facilitate removal of the tyre. Similar to the hook portion 3, the second hook portion 3' may be orthogonal to the longitudinal axis of the elongate body 1.

The hook portion 3 may comprise a protrusion 3a, located at a rear section of the hook portion 3. The protrusion 3a may be arranged to, in use, engage with a wall of the wheel rim to thereby keep the tool 100 in place during removal of the tyre. Referring to Figure 5, the protrusion 3a may sit on top of a side wall of the wheel rim to prevent the tool 100 from slipping out as the user applies pressure, which is a common problem with currently available tools.

The tool 100 may comprise a channel 4, or a recess, formed in the elongate body 1. The channel 4 may be formed in a lateral axis of the elongate body 1. In some examples, the channel 4 may be located, or formed, between the tyre-engagement portion 2 and the elongate body 1. The channel 4 may be substantially U-shaped.

The channel 4 may assist in fitting of the tyre by receiving a side wall of the wheel rim, as shown in Figure 5. The channel 4 may comprise a lip 4a arranged to, in use, engage with an inner section of the side wall of the wheel rim to thereby keep the tool 100 in place. The lip 4a may also serve as guiding means to improve the ease of fitting a tyre on a wheel rim. The lip 4a may have a plane that is co-planar with the plane of the elongate body 1.

The tyre-engagement portion 2 may be plate-like in shape, i.e. substantially flat. The tyre-engagement portion 2 may be arranged to, in use, contact the tyre to thereby position the tyre correctly within the wheel rim for the wheel rim to securely receive it.

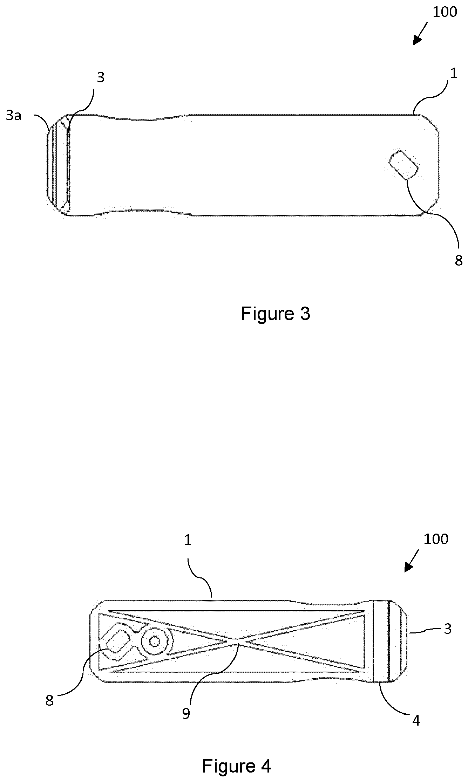

As shown in Figures 3 and 4, the tool 100 may comprise an aperture 8 in the elongate body 1. The aperture 8 may aid the user in storing the tool 100 in a neat manner, for example by hanging it onto a hook. Referring to Figure 4, the tool 100 may further comprise a plurality of structural support elements 9, to thereby strengthen the elongate body 1, i.e. the handle held by the user in use. The support elements 9 may vary in shape and location.

Use of the invention to fit and remove a tyre on a wheel rim will now be described with reference to the illustrated embodiment.

Without the use of a tool such a tyre lever, when fitting a tyre on a wheel rim, the user can typically lift a tyre over the wheel rim wall so that a first side wall of the tyre is received by the channel of the wheel rim. A portion of the second side wall of the tyre may also be lifted over the wheel rim without the use of the tool, such that the second side wall of the tyre is partly received by the channel of the wheel rim. However, without the use of a tool, it may not be possible to lift the remaining portion of the second side wall over the wheel rim wall, due to inflexibility and/or tightness of the tyre. At that point, a tool typically must be employed.

Referring to Figure 5, once the tool 100 is positioned in place, i.e. with the channel 4 over the wheel rim, in use, the tyre-engagement portion 2 may engage the side wall of the tyre to fit the tyre into the channel of the wheel rim, over the wheel rim wall. The tyre-engagement portion 2 may guide the uninstalled portion of the side wall towards the wheel rim. In an example, the user moves the tool 100 around the wheel rim circumferentially, while maintaining the wheel rim side wall in the channel 4, thereby enabling the tyre bead and the side wall of the uninstalled tyre portion to ease over the wall of the wheel rim. Importantly, due to the fact that the hook portion of the tool is orthogonal to the longitudinal axis of the elongate body, when installing the tyre on a wheel rim, the tool 100 remains at substantially 90 degrees to the tyre, preventing the user from hitting their hands on the wheel spokes.

In order to remove the tyre from the wheel rim, the user may push the hook portion 3 underneath part of a tyre bead on one of the side walls of the tyre so that the tyre bead is lifted and the hook portion 3 is located between the tyre bead and the wheel rim. In other words, during removal of the tyre from the wheel rim, the hook portion 3 may be located behind a side wall of the tyre. As discussed above, the tool 100 may be kept in place due to presence of the protrusion 3a, which sits on top of the wheel rim. During removal of the tyre, the tool 100 remains at substantially 90 degrees to the tyre, preventing the user from hitting their hands on the wheel spokes, due to the fact that the hook portion of the tool is orthogonal to the longitudinal axis of the elongate body.

As the hook portion 3 points to a direction opposite to the wheel rim, positioning the hook portion 3 underneath the tyre bead further lifts the tyre bead over and away from the wheel rim, as depicted in Figure 6. The tool 100 may then be moved circumferentially around the wheel rim until all of the tyre side wall has been removed from the wheel rim, or until enough of the tyre side wall has been removed for a user to continue to remove the tyre without the use of the tool. The tool may be moved circumferentially in either rotational direction to achieve this.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the invention as defined in the claims. The embodiments disclosed herein should be considered in all respects illustrative and not restrictive.

## Claims

1. A tool (100) for fitting and removing a cycle tyre on a cycle wheel rim, the tool comprising:
an elongate body (1) forming a handle for the tool, the elongate body (1) having a first end and a second end, a plane and a longitudinal axis;
a hook portion (3) at the first end of the elongate body, the hook portion (3) being orientated orthogonally to the longitudinal axis of the elongate body and extending out of the plane of the elongate body, engageable, in use during removal of the tyre from the wheel rim, with an inner side wall of the tyre to facilitate removal of the tyre from the wheel rim;
wherein the hook portion further comprises an elongate protrusion (3a) orthogonal to the longitudinal axis of the elongate body and located at a rear portion of the hook portion, the protrusion (3a) arranged to sit, in use during removal of the tyre from the wheel rim, on top of a side wall of the wheel rim to thereby keep the tool (100) in place during removal of the tyre from the wheel rim and to engage, in use during fitting of the tyre to the wheel rim, an outer side wall of the tyre;
a tyre-engagement portion (2) at the first end of the elongate body, the tyre-engagement portion (2) having a substantially flat surface and being arranged to, in use during fitting of the tyre to the wheel rim, engage, together with the elongate protrusion (3a), with an outer side wall of the tyre to thereby facilitate fitting of the tyre, the tyre-engagement portion (2) having a plane which is substantially perpendicular to the longitudinal axis of the elongate body (1); and
a channel (4) formed in a lateral axis of the elongate body at the first end of the elongate body (1), the channel (4) arranged, in use in fitting the tyre to the wheel rim, to receive a side wall of the wheel rim, wherein the channel (4) further comprises a lip (4a) arranged to, in use, engage with an inner section of the side wall of the wheel rim.

2. The tool of claim 1, wherein the elongate body comprises an aperture (8).

3. The tool of claim 1 or claim 2, wherein the elongate body comprises a plurality of structural support elements (9).

4. The tool of any preceding claim, wherein the elongate body is generally planar in form.

5. The tool of any preceding claim further comprising a second hook (3') at the second end of the elongate body, the second hook (3') being orthogonal to the longitudinal axis of the elongate body (1).

6. A method for removing a cycle tyre from a cycle wheel rim using the tool (100) according to any one of claims 1 to 5, the method comprising:
pushing the hook portion (3) underneath part of a tyre bead so that the tyre bead is lifted and the hook portion (3) is located between the tyre bead and the wheel rim;
moving the tool (100) circumferentially around the wheel rim to thereby remove the tyre,
wherein, during the removal, the tool (100) is arranged at substantially 90 degrees to the wheel and the tyre.

7. A method for fitting a cycle tyre on a cycle wheel rim using the tool (100) according to any one of claims 1 to 5, the method comprising:
placing the tyre over a wheel rim wall so that a first side wall of the tyre is wholly seated in a channel of the wheel rim;
positioning the tool (100) over the wheel rim wall such that the tyre-engagement portion (2) engages a second side wall of the tyre;
moving the tool (100) circumferentially around the wheel rim to thereby fit the second side wall of the tyre in the channel of the wheel rim,
wherein, during the fitting, the tool (100) is arranged at substantially 90 degrees to the wheel and the tyre.

## Patentansprüche

1. Werkzeug (100) zum Anbringen und Entfernen eines Fahrradreifens an einer Fahrradfelge, wobei das Werkzeug Folgendes umfasst:
einen länglichen Körper (1), der einen Griff für das Werkzeug bildet, wobei der längliche Körper (1) ein erstes Ende und ein zweites Ende, eine Ebene und eine Längsachse aufweist,
einen Hakenabschnitt (3) an dem ersten Ende des länglichen Körpers, wobei der Hakenabschnitt (3) orthogonal zu der Längsachse des länglichen Körpers ausgerichtet ist und sich aus der Ebene des länglichen Körpers erstreckt und im Gebrauch während des Entfernens des Reifens von der Radfelge mit einer inneren Seitenwand des Reifens in Eingriff gebracht werden kann, um das Entfernen des Reifens von der Radfelge zu erleichtern,
wobei der Hakenabschnitt ferner einen länglichen Vorsprung (3a) umfasst, der orthogonal zu der Längsachse des länglichen Körpers verläuft und sich an einem hinteren Abschnitt des Hakenabschnitts befindet, wobei der Vorsprung (3a) so angeordnet ist, dass er im Gebrauch während des Entfernens des Reifens von der Radfelge auf einer Seitenwand der Radfelge sitzt, um dadurch das Werkzeug (100) während des Entfernens des Reifens von der Radfelge an Ort und Stelle zu halten und bei der Verwendung während des Anbringens des Reifens an der Radfelge eine äußere Seitenwand des Reifens in Eingriff zu nehmen,
einen Reifeneingriffsabschnitt (2) an dem ersten Ende des länglichen Körpers, wobei der Reifeneingriffsabschnitt (2) eine im Wesentlichen flache Oberfläche aufweist und so angeordnet ist, dass er bei Verwendung während des Anbringens des Reifens an der Radfelge zusammen mit dem länglichen Vorsprung (3a) mit einer äußeren Seitenwand des Reifens in Eingriff kommt, um dadurch das Anbringen des Reifens zu erleichtern, wobei der Reifeneingriffsabschnitt (2) eine Ebene aufweist, die im Wesentlichen senkrecht zu der Längsachse des länglichen Körpers (1) verläuft, und
einen Kanal (4), der in einer seitlichen Achse des länglichen Körpers an dem ersten Ende des länglichen Körpers (1) ausgebildet ist, wobei der Kanal (4) bei Verwendung beim Anbringen des Reifens an der Radfelge so angeordnet ist, dass er eine Seitenwand der Radfelge aufnimmt, wobei der Kanal (4) ferner eine Lippe (4a) umfasst, die so angeordnet ist, dass sie bei Verwendung mit einem inneren Abschnitt der Seitenwand der Radfelge in Eingriff kommt.

2. Werkzeug nach Anspruch 1, wobei der längliche Körper eine Öffnung (8) umfasst.

3. Werkzeug nach Anspruch 1 oder Anspruch 2, wobei der längliche Körper eine Vielzahl von strukturellen Stützelementen (9) umfasst.

4. Werkzeug nach einem der vorhergehenden Ansprüche, wobei der längliche Körper eine allgemein planare Form aufweist.

5. Werkzeug nach einem der vorhergehenden Ansprüche, ferner umfassend einen zweiten Haken (3') an dem zweiten Ende des länglichen Körpers, wobei der zweite Haken (3') orthogonal zu der Längsachse des länglichen Körpers (1) ist.

6. Verfahren zum Entfernen eines Fahrradreifens von einer Fahrradfelge unter Verwendung des Werkzeugs (100) nach einem der Ansprüche 1 bis 5, wobei das Verfahren Folgendes umfasst:
Schieben des Hakenabschnitts (3) unter einen Teil eines Reifenwulsts, so dass der Reifenwulst angehoben wird und sich der Hakenabschnitt (3) zwischen dem Reifenwulst und der Radfelge befindet,
Bewegen des Werkzeugs (100) in Umfangsrichtung um die Radfelge, um dadurch den Reifen zu entfernen,
wobei das Werkzeug (100) während des Entfernens in einem Winkel von im Wesentlichen 90 Grad zu dem Rad und dem Reifen angeordnet ist.

7. Verfahren zum Anbringen eines Fahrradreifens an einer Fahrradfelge unter Verwendung des Werkzeugs (100) nach einem der Ansprüche 1 bis 5, wobei das Verfahren Folgendes umfasst:
Platzieren des Reifens über einer Radfelgenwand, so dass eine erste Seitenwand des Reifens vollständig in einem Kanal der Radfelge sitzt,
Positionieren des Werkzeugs (100) über der Radfelgenwand, so dass der Reifeneingriffsabschnitt (2) eine zweite Seitenwand des Reifens in Eingriff nimmt,
Bewegen des Werkzeugs (100) in Umfangsrichtung um die Radfelge, um dadurch die zweite Seitenwand des Reifens in den Kanal der Radfelge zu passen,
wobei das Werkzeug (100) während des Anbringens in einem Winkel von im Wesentlichen 90 Grad zu dem Rad und dem Reifen angeordnet ist.

## Revendications

1. Outil (100) pour monter et retirer un pneu de bicyclette sur une jante de roue de bicyclette, l'outil comprenant :
un corps allongé (1) formant un manche pour l'outil, le corps allongé (1) présentant une première extrémité et une seconde extrémité, un plan et un axe longitudinal ;
une partie crochet (3) au niveau de la première extrémité du corps allongé, la partie crochet (3) étant orientée orthogonalement à l'axe longitudinal du corps allongé et s'étendant hors du plan du corps allongé, pouvant être mise en prise, lors de l'utilisation pendant le retrait du pneu de la jante de roue, avec une paroi latérale intérieure du pneu pour faciliter le retrait du pneu de la jante de roue ;
la partie crochet comprenant en outre une saillie allongée (3a) orthogonale à l'axe longitudinal du corps allongé et située au niveau d'une partie arrière de la partie crochet, la saillie (3a) étant conçue pour reposer, lors de l'utilisation pendant le retrait du pneu de la jante de roue, sur une partie supérieure de la paroi latérale de la jante de roue, pour maintenir ainsi l'outil (100) en place pendant le retrait du pneu de la jante de roue et pour venir en prise, lors de l'utilisation pendant le montage du pneu sur la jante de roue, avec une paroi latérale extérieure du pneu ;
une partie de mise en prise de pneu (2) au niveau de la première extrémité du corps allongé, la partie de mise en prise de pneu (2) présentant une surface sensiblement plate et étant conçue pour, lors de l'utilisation pendant le montage du pneu sur la jante de roue, venir en prise, conjointement avec la saillie allongée (3a), avec une paroi latérale extérieure du pneu pour ainsi faciliter le montage du pneu, la partie de mise en prise de pneu (2) présentant un plan qui est sensiblement perpendiculaire à l'axe longitudinal du corps allongé (1) ; et
un canal (4) formé dans un axe latéral du corps allongé au niveau de la première extrémité du corps allongé (1), le canal (4) étant conçu, lors de l'utilisation pendant le montage du pneu sur la jante de roue, pour recevoir une paroi latérale de la jante de roue, le canal (4) comprenant en outre une lèvre (4a) conçue pour, lors de l'utilisation, venir en prise avec une section intérieure de la paroi latérale de la jante de roue.

2. Outil selon la revendication 1, le corps allongé comprenant une ouverture (8).

3. Outil selon la revendication 1 ou la revendication 2, le corps allongé comprenant une pluralité d'éléments de support structurels (9).

4. Outil selon l'une quelconque des revendications précédentes, le corps allongé ayant une forme générale plane.

5. Outil selon l'une quelconque des revendications précédentes, comprenant en outre un second crochet (3') au niveau de la seconde extrémité du corps allongé, le second crochet (3') étant orthogonal à l'axe longitudinal du corps allongé (1).

6. Procédé de retrait d'un pneu de bicyclette d'une jante de roue de bicyclette à l'aide de l'outil (100) selon l'une quelconque des revendications 1 à 5, le procédé comprenant les étapes consistant à :
pousser la partie crochet (3) sous une partie d'un talon de pneu de sorte que le talon de pneu soit soulevé et que la partie crochet (3) se trouve entre le talon de pneu et la jante de roue ;
déplacer l'outil (100) circonférentiellement autour de la jante de roue pour ainsi retirer le pneu,
lors du retrait, l'outil (100) étant disposé à sensiblement 90 degrés par rapport à la roue et au pneu.

7. Procédé de montage d'un pneu de bicyclette sur une jante de roue de bicyclette à l'aide de l'outil (100) selon l'une quelconque des revendications 1 à 5, le procédé comprenant les étapes consistant à :
placer le pneu sur une paroi de jante de roue de sorte qu'une première paroi latérale du pneu soit entièrement logée dans un canal de la jante de roue ;
positionner l'outil (100) sur la paroi de jante de roue de sorte que la partie de mise en prise de pneu (2) vienne en prise avec une seconde paroi latérale du pneu ;
déplacer l'outil (100) circonférentiellement autour de la jante de roue pour ajuster ainsi la seconde paroi latérale du pneu dans le canal de la jante de roue,
lors du montage, l'outil (100) étant disposé à sensiblement 90 degrés par rapport à la roue et au pneu.
